Europäisches Patentamt

European Patent Office

Office européen des brevets

(19)

(11) Veröffentlichungsnummer: **0 441 194 A2**

# (12) EUROPÄISCHE PATENTANMELDUNG

(21) Anmeldenummer: **91100939.7**

(22) Anmeldetag: **25.01.91**

(51) Int. Cl.⁵: **B01D 3/00**, B01D 5/00

(30) Priorität: **03.02.90 DE 4003224**
**14.03.90 DE 4008066**

(43) Veröffentlichungstag der Anmeldung:
**14.08.91 Patentblatt 91/33**

(84) Benannte Vertragsstaaten:
**AT BE CH DE DK ES FR GB GR IT LI LU NL SE**

(71) Anmelder: **INSTITUT FÜR ENTWICKLUNG UND FORSCHUNG DR. VIELBERTH KG**
**Weichser Weg 5**
**W-8400 Regensburg 12(DE)**

(72) Erfinder: **Vielberth, Johann, Dr.**
**Weichser Weg 5**
**W-8400 Regensburg(DE)**
Erfinder: **Willach, Eberhard**
**Ludwigplatz 29**
**W-8440 Straubing(DE)**

(74) Vertreter: **Graf, Helmut, Dipl.-Ing. et al**
**Greflinger Strasse 7 Postfach 382**
**W-8400 Regensburg(DE)**

(54) **Vorrichtung zur Gewinnung einer aufbereiteten Flüssigkeit in Form eines Kondensats aus einer aufzubereitenden Flüssigkeit.**

(57) Die Erfindung bezieht sich auf eine Vorrichtung zur Gewinnung einer aufbereiteten Flüssigkeit in Form eines Kondensats aus einer aufzubereitenden Flüssigkeit durch Verdampfen und Kondensieren, mit wenigstens einem ersten Strömungsbereich, der zur Ausbildung einer ersten flächigen Strömung der aufzubereitenden Flüssigkeit in einem Arbeitsraum vorgesehen ist, sowie mit wenigstens einer, dem ersten Strömungsbereich benachbarten und im Vergleich zur Temperatur der ersten Strömung kühleren Kondensationsfläche für am ersten Strömungsbereich verdampfte Flüssigkeit.

Die Erfindung zeichnet sich dadurch aus, daß dem wenigstens einen ersten Strömungsbereich in dem gemeinsamen Arbeitsraum wenigstens ein zweiter Strömungsbereich zur Ausbildung einer flächigen zweiten Strömung benachbart ist, und daß die Kondensationsfläche von der Oberfläche der Flüssigkeit des wenigstens einen zweiten Strömungsbereiches gebildet ist.

Fig. 2

EP 0 441 194 A2

# VORRICHTUNG ZUR GEWINNUNG EINER AUFBEREITETEN FLÜSSIGKEIT IN FORM EINES KONDENSATS AUS EINER AUFZUBEREITENDEN FLÜSSIGKEIT

Die Erfindung bezieht sich auf eine Vorrichtung gemäß Oberbegriff Patentanspruch 1 bzw. Patentanspruch 3.

Speziell zum Aufbereiten bzw. zum Destillieren von Wasser ist eine Vorrichtung bekannt (DE-A 30 10 042), bei der im Inneren eines Gehäuses mehrere erste, flächige Strömungsbereiche für das zu destillierende Wasser parallel zu dem Abstand voneinander ausgebildet sind. Jeder erste Strömungsbereich schließt an einer Seite unmittelbar an eine Wandung an, die an dem am weitesten außenliegenden Strömungsbereich eine durch Sonneneinstrahlung erwärmbare Kollektorfläche zum Erwärmen des aufzubereitenden Wassers in diesem Strömungsbereich bildet. Die entsprechenden Wandungen der weiter innenliegenden Strömungsbereiche dienen jeweils als Kondensationsflächen, die von dem aufzubereitenden Wasser gekühlt werden. Nachteilig ist bei dieser bekannten Vorrichtung, daß sie ausschließlich auf den Betrieb mit Solarenergie beschränkt ist und eine relativ aufwendige Konstruktion erforderlich macht. Letzteres ist allein schon durch die Notwendigkeit von Wandungen bzw. Wandelementen als Kondensationsflächen bedingt. Derartige Kondensationsflächen haben auch den Nachteil, daß sie zur Vermeidung von Korrosionen aus einem korrosionsfesten Material hergestellt werden müssen, und daß sich außerdem an solchen Wandelementen Schmutz, Keime (z.B. Bakterien) usw. anlagern können.

Zum Aufbereiten von Meerwasser ist weiterhin eine Vorrichtung bekannt (GB-A 10 31 005), bei der im Inneren eines Gehäuses in horizontaler Richtung nebeneinander sowie in vertikaler Richtung übereinander mehrere, jeweils nach oben hin offene Rinnen vorgesehen sind, in denen das Meerwasser bzw. das aufbereitete Wasser im wesentlichen stehend aufgenommen ist. Das aufzubereitende Meerwasser wird verdampft und kondensiert an der Oberfläche des kälteren aufbereiteten Wassers. Diese bekannte Vorrichtung benötigt ein relativ großes Volumen. Trotzdem ist eine ausreichende Leistung (je Zeiteinheit aufbereitete Menge an Meerwasser) nicht erreichbar.

Aufgabe der Erfindung ist es, eine Vorrichtung aufzuzeigen, die die vorgenannten Nachteile vermeidet und bei einfacher Konstruktion auch einen verbesserten Wirkungsgrad aufweist.

Zur Lösung dieser Aufgabe ist eine Vorrichtung entsprechend dem kennzeichnenden Teil des Patentanspruches 1 und des Patentanspruches 3 ausgebildet.

Auch bei der erfindungsgemäßen Vorrichtung ist die Kondensationsfläche nicht von der Fläche eines Wandelementes, sondern direkt von einer freiliegenden Flüssigkeitsoberfläche gebildet, allerdings von der Flüssigkeitsoberfläche einer an dem jeweils zweiten Strömungsbereich ausgebildeten zweiten Flüssigkeitsströmung der aufbereiteten Flüssigkeit. Die Flüssigkeitstemperatur der zweiten Flüssigkeitsströmung ist dabei niedriger als die Flüssigkeitstemperatur der ersten Flüssigkeitsströmung.

Der wenigstens eine erste Strömungsbereich und der wenigstens eine zweite Strömungsbereich erstrecken sich in dem gemeinsamen Arbeitsraum ohne dazwischenliegende Trennwand einander benachbart jeweils in vertikaler Richtung oder in einer Richtung, die mit der Vertikalen einen spitzen Winkel, d.h. einen Winkel höchstens gleich, bevorzugt jedoch kleiner als 45° einschließt. An den Strömungsbereich bildet sich somit eine vorhangartige Strömung.

Die Strömungsbereiche, die mit der Vertikalen den spitzen Winkel einschließen, sind an einer Strömungshilfe aus hydrophilem bzw. benetzbarem Material ausgebildet. Hierunter ist im Sinne der Erfindung ein Material zu verstehen, welches einen möglichst homogenen, großflächigen Flüssigkeitsstrom mit freiliegender Flüssigkeitsoberfläche ermöglicht. Ein hydrophiles bzw. benetzbares Material im Sinne der Erfindung sind daher beispielsweise Gewebe, vliesartige Flachmaterialien, Vliesstoffe oder auch gitter- oder siebartige Materialien bzw. Strukturen.

Bei sich in vertikaler Richtung erstreckenden Strömungsbereichen sind diese bevorzugt jeweils ebenfalls an einer Strömungshilfe aus dem hydrophilen Material ausgebildet.

Die zumindest im wesentlichen vertikale Anordnung der Strömungsbereiche in dem gemeinsamen Arbeitsraum unmittelbar nebeneinander ermöglicht es, daß sich der am ersten Strömungsbereich (aus dem dortigen, wärmeren Flüssigkeitsstrom) austretende Flüssigkeitsdampf direkt am kühleren Flüssigkeitsstrom des zweiten Strömungsbereiches als Kondensat niederschlagen und mit diesem Flüssigkeitsstrom mitgeführt werden kann. Bei kleinem Volumen der Vorrichtung sind daher eine optimale Wirkungsweise bzw. ein hoher Wirkungsgrad erreichbar, und zwar bei exakter Trennung der jeweiligen Phasen bzw. Medien, d.h. der aufzubereitenden und aufbereiteten Flüssigkeit. Insbesondere auch die Strömungshilfen aus hydrophilem Material tragen zu einer verbesserten Trennung der einzelnen Phasen des Mediums entscheidend bei und stellen eine großflächige sowie gleichmäßige Verteilung sowohl der zu verdampfenden Flüssigkeit als auch des Kondensats sicher. Bei der Erfindung ergeben sich bei geringer Fördermenge konstante und optimale, thermodynamische Verhältnisse, d.h. insbes. auch eine gleichmäßige Medium- bzw. Wärmetauscherfläche.

Bei der Erfindung werden bei gleicher Größe bzw. bei gleichen Abmessungen der Vorrichtung wesentlich größere Flächen für das Verdampfen der aufzubereitenden Flüssigkeit und das Kondensieren der aufbereiteten Flüssigkeit erreicht, insbesondere auch deswegen, weil jeder Strömungsbereich beidseitig wirksam ist.

Die Erfindung wird im folgenden anhand der Figuren an Ausführungsbeispielen, welche sich auf die Trinkwassergewinnung aus Meerwasser beziehen, näher erläutert. Es zeigen:

Fig. 1     im Blockschaltbild eine Vorrichtung gemäß der Erfindung beinhaltende Anlage zur Trinkwassergewinnung aus Meerwasser;

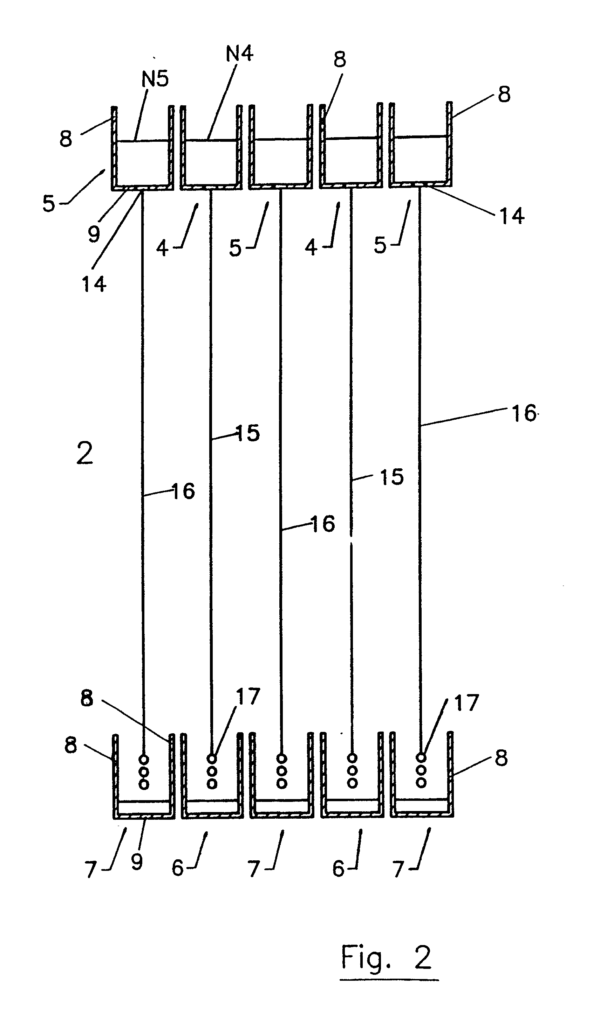

Fig. 2     in vereinfachter Darstellung und im Schnitt einen Teil der Verdampfungs- und Kondensationsanordnung der Vorrichtung;

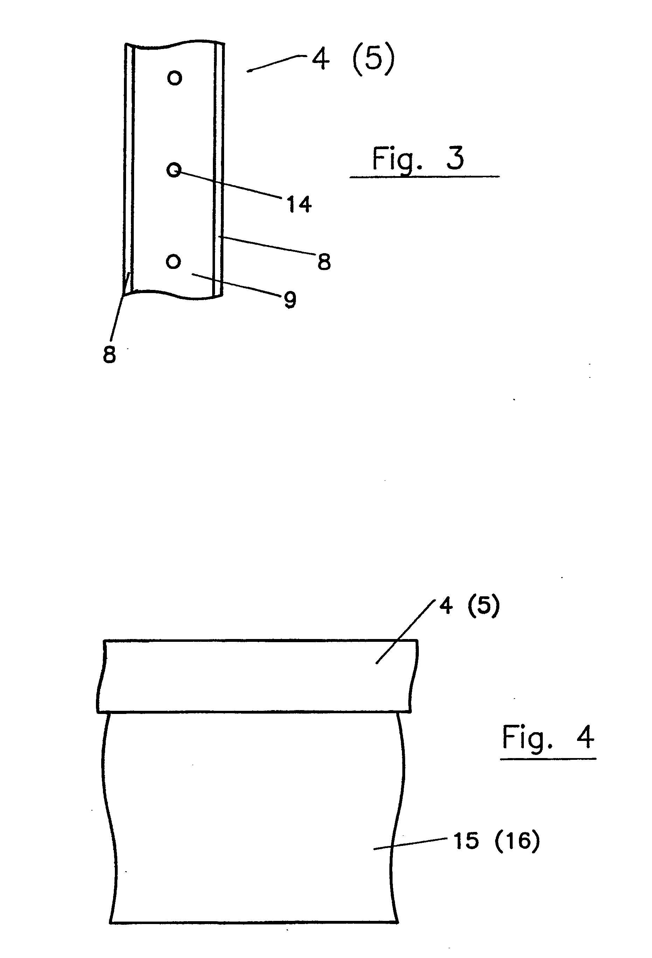

Fig. 3     in Draufsicht eine Teillänge des oberen Zufuhr- und Verteilerkanals für die aufzubereitende Flüssigkeit (Meerwasser) bzw. für das Kondensat;

Fig. 4     eine Teillänge des oberen Zufuhr- und Verteilerkanals für die aufzubereitende Flüssigkeit bzw. für das Kondensat in Seitenansicht, zusammen mit einem über die Unterseite des Kanals wegstehenden Strömungshilfe aus hydrophilem Material;

Fig. 5     in vereinfachter Darstellung und im Querschnitt den oberen Zufuhr- und Verteilerkanal für die aufzubereitende Flüssigkeit bzw. für das Kondensat bei einer weiteren Ausführungsform der Erfindung;

Fig. 6     und 7 in schematischer Darstellung und in Draufsicht zwei weitere Ausführungsformen der erfindungsgemäßen Vorrichtung;

Fig. 8     in schematischer Darstellung mehrere, eine Gesamtanlage bzw. Vorrichtung bildende kaskadenartig aufeinanderfolgende Vorrichtungen;

Fig. 9     im Längs- bzw. Vertikalschnitt eine weitere, bevorzugte Ausführungsform einer mehrstufigen Vorrichtung gemäß der Erfindung;

Fig. 10    einen Schnitt entlang der Linie 1-1 der Fig. 9;

Fig. 11    eine Hälfte einer oberen Platte der Vorrichtung nach Fig. 9;

Fig. 12    einen Schnitt entsprechend der Linie II-II der Fig. 11;

Fig. 13    in ähnlicher Darstellung wie Fig. 11 eine untere Platte der Vorrichtung nach Fig. 9;

Fig. 14    einen Schnitt entsprechend der Linie III-III der Fig. 13.

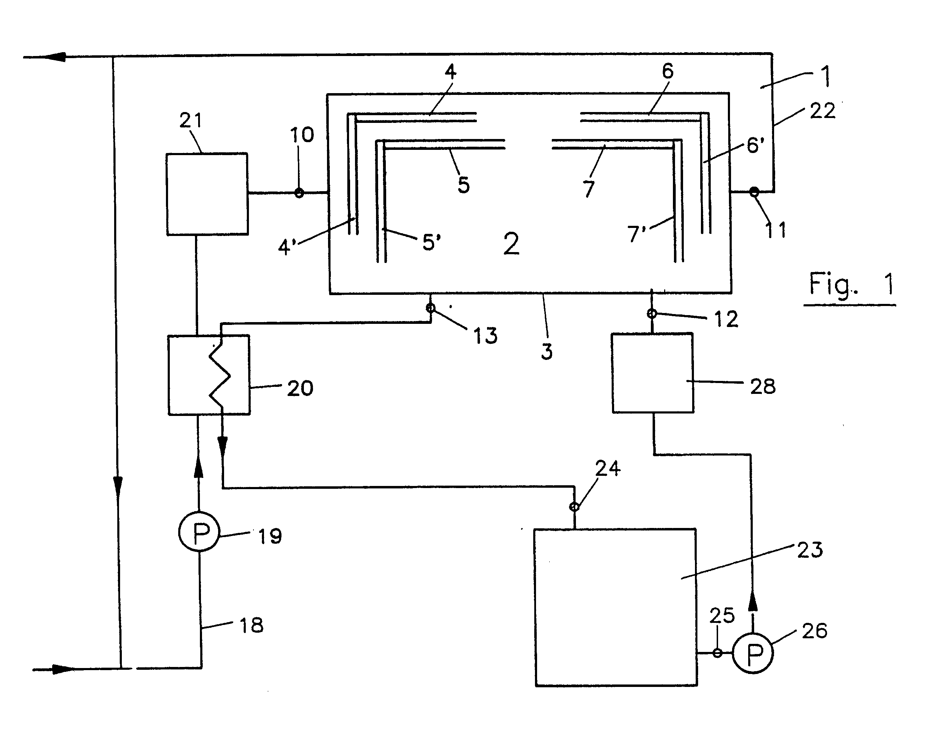

Die Fig. 1 zeigt eine Anlage zum Entsalzen von Meerwasser, d.h. zur Gewinnung von Brauch- bzw. Trinkwasser aus Meerwasser. Kernstück dieser Anlage ist eine Verdampfungs- und Kondensationsvorrichtung 1, die im Innenraum 2 eines geschlossenen und vorzugsweise thermisch isolierten Gehäuses 3 eine Vielzahl von sich parallel zueinander und in horizontaler Richtung erstreckenden oberen Kanälen 4 und 5 sowie unteren Kanälen 6 und 7 aufweist. Sämtliche Kanäle 4 - 7 sind hinsichtlich ihres Profils jeweils gleichartig ausgebildet, d.h. sie bestehen jeweils aus einer Länge eines nach oben hin offenen U-Profils mit zwei parallel zueinander angeordneten, sich in vertikalen Ebenen erstreckenden Schenkeln 8 und aus einer diese Schenkel miteinander verbindenden horizontalen Jochfläche 9. Das die Kanäle 4-7 bildende Profil ist einstückig mit den Schenkeln 8 und der Jochfläche 9 aus einem korrosionsbeständigen Material, beispielsweise aus Kunststoff gefertigt. Trotz ihres gleichen Profils haben die Kanäle 4 und 5 bzw. 6 und 7 unterschiedliche Funktion, d.h. die Kanäle 4 dienen als Zufuhr- und Verteilerkanäle für die zu behandelnde Flüssigkeit, d.h. für das zu entsalzende Meerwasser und die Kanäle 5 als Zufuhr- und Verteilerkanäle für das aus der aufzubereitenden Flüssigkeit gewonnene Kondensat. Die Kanäle 4 und 5 sind jeweils abwechselnd und eng benachbart auf im wesentlichen gleichen horizontalen Niveau parallel zueinander vorgesehen, und zwar derart, daß senkrecht zur Längserstreckung dieser Kanäle an beiden Seiten jedes Kanals 4 ein Kanal 5 vorgesehen ist.

In vertikaler Richtung unterhalb jedes Kanales 4 ist ein Kanal 6 vorgesehen, der als Sammel- und Abfuhrkanal für die aufzubereitende Flüssigkeit dient. Weiterhin ist in vertikaler Richtung unterhalb jedes Kanales 5 ein Kanal 7 vorgesehen, der zum Sammeln und Abführen des Kondensats dient. Die Kanäle 6 und 7, von denen wiederum jeder Kanal 6 beidseitig von jeweils einem Kanal 7 eingeschlossen ist, befinden sich bei der dargestellten Ausführungsform ebenfalls auf einem gleichen, horizontalen Niveau.

Über einen Verteiler 4' sind sämtliche Kanäle 4 an ihrem einen Ende mit einem Eingang 10 für die aufzubereitende Flüssigkeit (Meerwassereingang) verbunden. An ihrem anderen Ende sind sämtliche Kanäle 4 an einen nicht näher dargestellten Überlauf angeschlossen, der seinerseits mit einem Ausgang 11 für die aufzubereitende Flüssigkeit (Seewasserausgang) in Verbindung steht. Dieser Überlauf ist wehrartig derart ausgebildet, daß sich in den Kanälen 4 ein Flüssigkeitsspiegel auf einem vorgegebenen Niveau N4 einstellt und überschüssige Flüssigkeit über diesen Überlauf abfließt.

Sämtliche den Kanälen 4 zugeordnete Kanäle 6 sind über einen Verteiler 6' an ihrem einen Ende ebenfalls an den Ausgang 11 angeschlossen. Der Verteiler 6' befindet sich bei der dargestellten Ausführungsform an dem den Verteiler 4' entfernt liegenden Ende der Kanäle 6, also dort, wo auch der vorerwähnte Überlauf für die Kanäle 4 vorgesehen ist.

Sämtliche Kanäle 5 sind über einen Verteiler 5' mit einem Ende an einen Eingang 12 für das Kondensat (Kondensat-Eingang) angeschlossen. Bei der dargestellten Ausführungsform befindet sich der Verteiler 5' an demjenigen Ende der Kanäle 5, wo auch der Verteiler 4' vorgesehen ist. Am anderen Ende der Kanäle 5 ist ein Überlauf vorgesehen, über den diese Kanäle mit dem Ausgang 13 für das Kondensat (Kondensat-Ausgang) in Verbindung stehen. Auch dieser, nicht dargestellte Überlauf ist wehrartig derart ausgebildet, daß sich in den Kanälen 5 ein Flüssigkeitsspiegel für das Kondensat mit dem Niveau N5 einstellt und erst bei Erreichen dieses Niveaus überschüssiges Kondensat über den Überlauf an den Ausgang 13 gelangt. Sämtliche Kanäle 7 sind über einen Verteiler 7' ebenfalls an den Ausgang 13 angeschlossen. Es versteht sich, daß die vorerwähnten Verbindungen so ausgeführt sind, daß die aufzubereitende Flüssigkeit, d.h. das Meerwasser nicht unmittelbar in den Kreislauf für das Kondensat gelangen kann.

Die Kanäle 4 und 5 sind in der Mitte ihres von der jeweiligen Jochfläche 9 gebildeten Bodens entlang einer Mittellinie mit einer Vielzahl von durchgehenden Öffnungen 14 versehen, und zwar in einem vorgegebenen Abstand. Im Bereich dieser von den Löchern 14 gebildeten und sich jeweils in Längsrichtung eines jeden Kanales 4 bzw. 5 erstreckenden Lochreihen ist an der Unterseite der Jochfläche 9 jedes Kanales eine vorhangartige Strömungshilfe 15 bzw. 16 im Bereich ihres oberen, horizontalen Längsrandes in geeigneter Weise befestigt, und zwar jeweils eine Strömungshilfe 15 an jedem Kanal 4 und eine Strömungshilfe 16 an einem Kanal 5. Die Strömungshilfen 15 und 16 verlaufen vorhangartig nach unten und reichen jeweils mit ihren unteren, horizontalen Rand bis in den zugehörigen unteren Kanal 6 bzw. 7 hinein. Durch entsprechende, am unteren Rand vorgesehene Gewichte 17 und/oder durch Federvorspannung sind die Strömungshilfen 15 bzw. 16 gestreckt gehalten, und zwar derart, daß beidseitig von jeder Strömungshilfe 15 eine Strömungshilfe 16 angeordnet ist, und zwar in einem möglichst geringen Abstand von der Strömungshilfe 15, ohne diese jedoch zu berühren. In Längsrichtung der Kanäle 5 - 7 können die Strömungshilfen 15 und 16 jeweils durchgehend ausgebildet sein. Es können aber auch mehrere vorhang- bzw. lappenartige Strömungshilfen in Längsrichtung der Kanäle aneinander anschließend verwendet sein.

Das aufzubereitende Meerwasser wird über eine Meerwasser-Leitung 18 mittels der Pumpe 19 angesaugt und über einen Wärmetauscher 20 einer Heizeinrichtung 21 zugeführt, in der das Meerwasser auf eine Temperatur erwärmt wird, die allerdings unterhalb des Siedepunktes bei normalem Atmosphärendruck liegt. Die Heizeinrichtung 21 kann in unterschiedlichster Weise ausgebildet sein. Sie kann z.B. mit elektrischem Strom oder fossilen Brennstoffen betrieben sein. Weiterhin kann die Heizeinrichtung 21 auch eine solche sein, die die Erwärmung des Meerwassers unter Ausnutzung von Solar-Energie bewirkt. Letzteres ist insbesondere dann der Fall, wenn die Anlage in geographischen Bereichen eingesetzt werden soll, in denen eine ausreichende Solar-Energie bzw. Sonnen-Einstrahlung gewährleistet ist. Das von der Heizeinrichtung 21 aufgeheizte Meerwasser gelangt an den Eingang 10 der Vorrichtung 1.

Der Ausgang 11 ist an eine Rohrleitung 22 angeschlossen, die das Meerwasser abführt. Dabei sind zwei Betriebsweisen möglich:
Bei einer ersten Betriebsmöglichkeit wird das Meerwasser vom Ausgang 11 über die Rohrleitung 22 direkt ins Meer abgeleitet.

Bei einer zweiten Betriebsweise wird ein Teil des Meerwassers vom Ausgang 11 an den Eingang 10 zurückgeführt und dabei mit frischem Meerwasser vermischt. Die Menge an zugeführtem Meerwasser ist hierbei geringer als bei der ersten Betriebsweise. Der Vorteil dieser zweiten Betriebsweise ist daher u.a., daß weniger zugeführtes Meerwasser gefiltert und/oder aufbereitet werden muß und daß die benötigte Pumpleistung bzw. -arbeit geringer ist.

Zum Sammeln des mit der Anlage gewonnenen Brauch- bzw. Trinkwassers ist ein Tank 23 vorgesehen, dessen Eingang 24 über den Wärmetauscher 20 mit dem Brauchwasserausgang 13 verbunden ist. An den Tank 23 ist dann die nicht näher dargestellte Brauch- bzw. Trinkwasserversorgung angeschlossen. Der Tank 23 besitzt außerdem einen Hilfsausgang 25, der über eine Hilfspumpe 26 und eine Kühleinrichtung bzw. einen Kühler 28 an den Brauchwassereingang 12 führt.

Die Arbeitsweise der Anlage bzw. der Vorrichtung 1 läßt sich, wie folgt, beschreiben:
Über die Hilfspumpe 26, den Kühler 28, den Eingang 12 und den Verteiler 5' werden die Kanäle 5 mit dem Kondensat bzw. mit Brauchwasser aus dem Tank 23 versorgt, welches (Brauchwasser) im Kühler 28 gekühlt wird. Das somit gekühlte Kondensat bzw. Brauchwasser tritt durch die Öffnungen 14 der Kanäle 5 hindurch, fließt an den Strömungshilfen 16 nach unten und bildet dabei einen sich vorhangartig nach unten erstreckenden Kondensat-Fluß, in welchem das Kondensat bzw. dessen Flüssigkeitsoberfläche völlig frei liegt und nicht durch eine Wand oder dgl. abgedeckt ist. Das an den Strömungshilfen 16 nach unten geflossene Kondensat wird von den Kanälen 7 aufgefangen und über den Ausgang 13 sowie den Wärmetauscher 20 an den Tank 23 zurückgeleitet, und zwar zusammen mit evtl. Kondensat von dem Überlauf der Kanäle 5.

Das in der Heizeinrichtung 21 erhitzte Meerwasser gelangt über den Eingang 10 und den Verteiler 4' in die Kanäle 4 und fließt durch die dortigen Öffnungen 14 an den Strömungshilfen 15 nach unten. Hierbei verdunstet bzw. verdampft ein Großteil des Wasseranteils des Meerwassers und der hierbei entstehende Wasserdampf kondensiert beim Auftreffen auf das wesentlich kältere, an den Strömungshilfen 16 nach unten fließende Kondensat. Der verdampfte und kondensierte Wasseranteil des an den Strömungshilfen 15 nach unten fließenden Meerwassers wird mit dem übrigen Kondensat über die Kanäle 7 und den Ausgang 13 an den Tank 23 geleitet.

Ein wesentlicher Vorteil der Vorrichtung bzw. der von den Kanälen 4 - 7 und den zugehörigen Strömungshilfen 15 und 16 gebildeten Verdampfungs- und Kondensationsanordnung besteht darin, daß das Verdampfen bzw. Verdunsten sowie das Kondensieren in unmittelbarer räumlicher Nähe erfolgen und sich schon allen hierdurch bei einem vereinfachten und kompakten Aufbau der Vorrichtung 1 ein hoher Wirkungsgrad ergibt. Letzterer wird besonders dadurch gesteigert, daß das Kondensieren des Wasserdampfes direkt am kühleren Kondensat erfolgt und nicht etwa an Flächen der Vorrichtung. Diese Art der Kondensation trägt aber auch zur Vereinfachung der Konstruktion bei und stellt sicher, daß eine Korrosionsbildung sowie ein Verschmutzen dort, wo das Kondensat gebildet wird, nicht auftreten können. Die Strömungshilfen 15 und 16 bestehen beispielsweise aus einem Gewebe, einem Vlies oder dgl. hydrophilen Material, welches unter Verwendung von natürlichen Stoffen oder Kunststoffen hergestellt sein kann. Als Strömungshilfen 15 und 16 eignen sich beispielsweise auch Zuschnitte aus einem siebartigen Material aus Metall und/oder Kunststoff. Das jeweilige, für die Strömungshilfen 15 und 16 verwendete Material sollte als hydrophiles Material derart ausgewählt sein, daß in diesem Material eine Verteilung des durch die Öffnungen 14 der Kanäle 4 bzw. 5 auftretenden Flüssigkeit in Kanallängsrichtung erfolgt und sich an beiden Seiten der jeweiligen Strömungshilfe 15 bzw. 16 ein Flüssigkeitsstrom mit freiliegender Flüssigkeitsoberfläche ergibt.

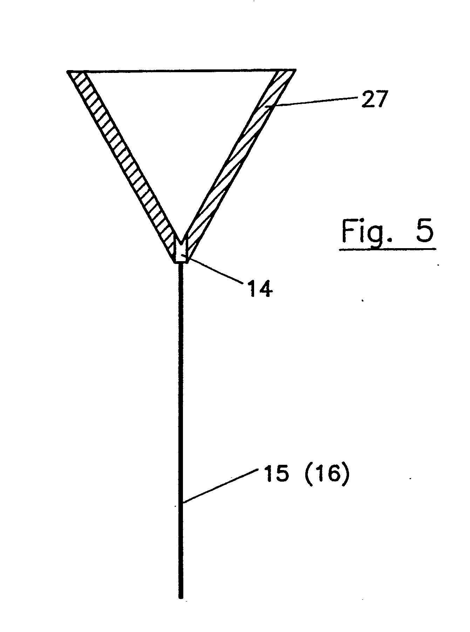

Fig. 5 zeigt im Querschnitt einen Kanal 27, der von einem nach oben hin offenen V-Profil gebildet ist und beispielsweise anstelle der Kanäle 4 und/oder 5 Verwendung finden kann. Der Kanal 27 ist wiederum von einer Länge eines entsprechenden Profils aus einem korrosionsbeständigen Material hergestellt. An seiner Unterseite, d.h. im Bereich des tiefsten Punktes des Querschnitts ist der Kanal 27, sofern er die Funktion der Kanäle 4 bzw. 5 hat, mit den Öffnungen 14 versehen. Dort ist dann auch wiederum die Strömungshilfe 15 bzw. 16 mit ihrem oberen horizontalen Rand befestigt. Der V-förmige Profilquerschnitt des Kanales 27 ist beispielsweise dann von Vorteil, wenn dieser Kanal anstelle der Kanäle 5 verwendet wird. Durch die V-Profilform wird dann auch solches Kondensat nach unten an die Strömungshilfe 16 geleitet, welches sich an der Außenfläche des Kanales 27 abgeschieden hat.

Die Erfindung wurde voranstehend an einem Ausführungsbeispiel beschrieben. Es versteht sich, daß zahlreiche Änderungen sowie Abwandlungen möglich sind, ohne daß dadurch der der Erfindung zugrundeliegende Erfindungsgedanke verlassen wird.

Bei der dargestellten Ausführungsform wurde davon ausgegangen, daß die oberen Zufuhr- und Verteilerkanäle sowie die unteren Sammel- und Abfuhrkanäle langgestreckte, geradlinige Kanäle sind, wobei jeweils ein von den Kanälen 4 und 6 und der Strömungshilfe 15 gebildeter Strömungsbereich für die aufzubereitende Flüssigkeit in Kanallängsrichtung zwischen zwei, jeweils von den Kanälen 5 und 7 und der Strömungshilfe 16 gebildeten Strömungsbereich angeordnet ist. Es sind jedoch auch andere Strukturen denkbar, beispielsweise in der Form, daß jeweils ein Strömungsbereich für die aufzubereitende Flüssigkeit ringförmig von einem Strömungsbereich für das Kondensat umschlossen ist.

Weiterhin ist es grundsätzlich auch möglich, zumindest die Strömungshilfen 15 für die aufzubereitende Flüssigkeit in einer gegenüber der Vertikalen leicht geneigten Ebene vorzusehen, um so an der wegen der Neigung nach oben gerichteten Oberflächenseite dieser Strömungshilfen durch Auftrieb den Austritt des Wasserdampfes zu unterstützen.

Bei der in den Figuren beschriebenen Ausführungsform sind die Kanäle 5 - 7 bzw. 27 jeweils separate Elemente, die mittels entsprechender Halteeinrichtungen oder -elemente im Gehäuse 3 angeordnet und gehalten sind. Grundsätzlich ist es auch möglich, die oberen und/oder unteren Kanäle einstückig miteinander bzw. mit entsprechenden Elementen der Vorrichtung 1 oder des Gehäuses 3 herzustellen.

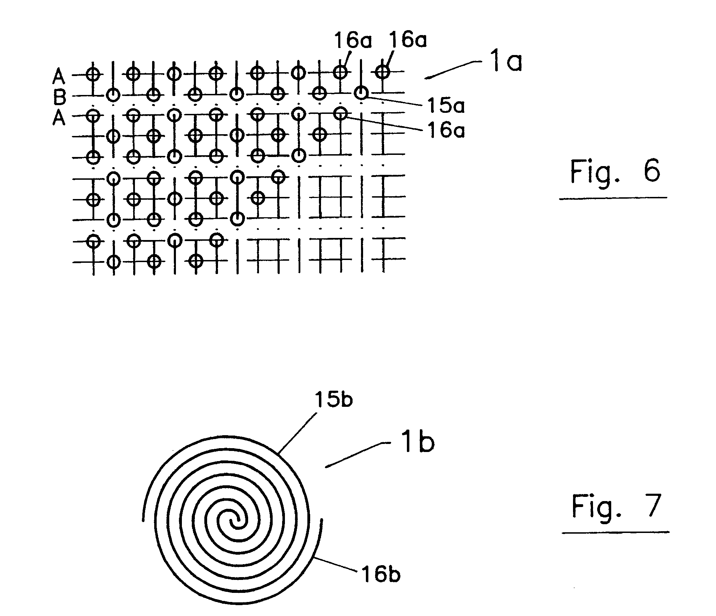

Die Fig. 6 zeigt in schematischer Darstellung eine Vorrichtung 1a, bei der anstelle der Strömungshilfen 15 und 16 aus flächigem Material bzw. Flachmaterial strangartige Strömungshilfen 15a bzw. 16a verwendet sind, die sich in vertikaler Richtung, d.h. senkrecht zur Zeichenebene der Fig. 6 erstrecken und beispielsweise aus Fasern oder Hohlfasern bestehen. Die Strömungshilfen 15a und 16a können aber auch von stabförmigen Elementen aus hydrophilem Material hergestellt sein. Die Anordnung ist dabei so getroffen, daß jede Strömungshilfe 15a für die zu behandelnde Flüssigkeit von mehreren Strömungshilfen 16a für das Kondensat umgeben ist, wobei es für die Zuführung und Abführung der Füssigkeiten zweckmäßig ist, die Strömungshilfen 15a und 16a entsprechend der Fig. 6 in mehreren dort mit A bzw. B bezeichneten Reihen anzuordnen. Jede Reihe A ist dabei von den Strömungshilfen 16a und jede Reihe B von den Strömungshilfen 15a gebildet. Die Strömungshilfen 15a in den Reihen B sind jeweils um den halben Abstand zweier Strömungshilfen gegenüber den Strömungshilfen 16a der benachbarten Reihen A in Reihenlängsrichtung versetzt und außerdem ist jede Reihe B zwischen zwei Reihen A gebildet.

Die Fig. 7 zeigt eine Vorrichtung 1b, bei der zwei Strömungshilfen 15b bzw. 16b verwendet sind, die jeweils aus flächigem Material bestehen und spiralartig um eine gedachte vertikale Achse verlaufen. Die Strömungshilfe 15b ist für die zu behandelnde Flüssigkeit und die Strömungshilfe 16b für das kältere Kondensat vorgesehen. Bei der Vorrichtung 1b können selbstverständlich in einem gemeinsamen Arbeitsraum auch mehrere derartige, von den Strömungshilfen 15b und 16b gebildete Anordnungen vorgesehen sein.

Zur Steigerung des Wirkungsgrades ist es auch möglich, den Innenraum der jeweiligen Vorrichtung 1, 1a und 1b, d.h. beispielsweise den Innenraum 3 der Vorrichtung 1 mit einem Unterdruck zu beaufschlagen, um so den Austritt des Wasserdampfes an den Strömungshilfen 15, 15a, 15b bzw. an den die aufzubereitende Flüssigkeit führenden Kanäle 29 zu fördern.

Weiterhin ist es auch möglich, in dem jeweiligen Gehäuse bzw. Arbeitsraum der Vorrichtung beispielsweise durch Umwälzung eine Gas- und Luftströmung in der Form zu erzeugen, daß an den von der zu behandelnden bzw. aufzubereitenden Flüssigkeit gebildeten Strömungsbereichen die dortige Grenzschicht aus verdampfter Flüssigkeit beschleunigt abgeführt und/oder die verdampfte Flüssigkeit beschleunigt an die die Kondensationsfläche bildenden Strömungsbereich des kühleren Kondensats transportiert wird. durchfließen.

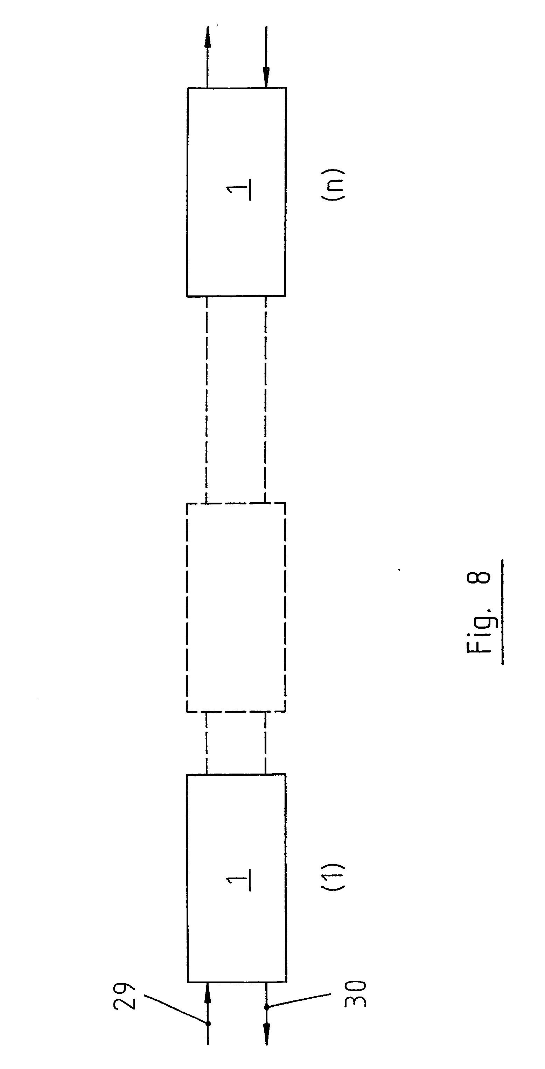

Wie in der Fig. 8 dargestellt ist, kann es insbes. auch bei Anlagen zum Aufbereiten von Wasser zweckmäßig sein, mehrere Vorrichtungen, z. B.

Vorrichtungen 1 kaskadenartig, d.h. als eine Reihe von n solcher Vorrichtungen derart vorzusehen, daß sämtliche Vorrichtungen 1 jeweils von der bei 29 zugeführten, aufzubereitenden Flüssigkeit sowie auch von der bei 30 entnommenen aufbereiteten Flüssigkeit durchströmt werden. Die Richtung, in der die aufbereitete Flüssigkeit die einzelnen Vorrichtungen 1 nacheinander durchströmt, ist dabei umgekehrt zu der Richtung, in der die einzelnen Vorrichtungen 1 von der aufzubereitenden Flüssigkeit durchströmt werden. Die aufzubereitende Flüssigkeit fließt dabei beispielsweise von der Vorrichtung der Nummer (1) zur Vorrichtung der Nummer (2) usw. bis zur Vorrichtung der Nummer (n), während die aufbereitete Flüssigkeit bzw. das Kondensat von der Vorrichtung der Nummer (n) zur Vorrichtung der Nummer (n-1) usw. fließt. Durch diese Ausbildung ergibt sich eine wesentliche Verbesserung der Energieausnutzung bzw. Energiebilanz und insbesondere auch der Energie-Leistungsziffer, die den Quotienten aus der benötigten Energie und der zuzuführenden Fremdenergie darstellt. Die benötige Energie ist hierbei insbes. diejenige Energie, die insgesamt für die Aufbereitung bzw. Verdampfung der aufzubereitenden Flüssigkeit und/oder Kühlung der aufbereiteten Flüssigkeit erforderlich ist. Da sich die aufzubereitende Flüssigkeit beim Durchströmen der kaskadenartig aufeinanderfolgenden Vorrichtungen 1 abkühlt bzw. umgekehrt die aufbereitete Flüssigkeit sich beim Durchströmen der einzelnen Vorrichtungen erwärmt, ist durch die vorstehende Strömungsrichtung (Gegenstromprinzip) für die aufzubereitende Flüssigkeit und die aufbereitete Flüssigkeit sichergestellt, daß innerhalb jeder Vorrichtung bzw. innerhalb jedes Arbeitsraumes eine ausreichende Temperaturdifferenz zwischen der aufzubereitenden Flüssigkeit und der aufbereiteten Flüssigkeit besteht, ohne daß zusätzliche Fremdenergie zugeführt werden muß. Anstelle von einzelnen Vorrichtungen 1 können bei dem kaskadenartigen Aufbau auch aufeinanderfolgende Stufen einer einzigen Vorrichtung vorgesehen sein.

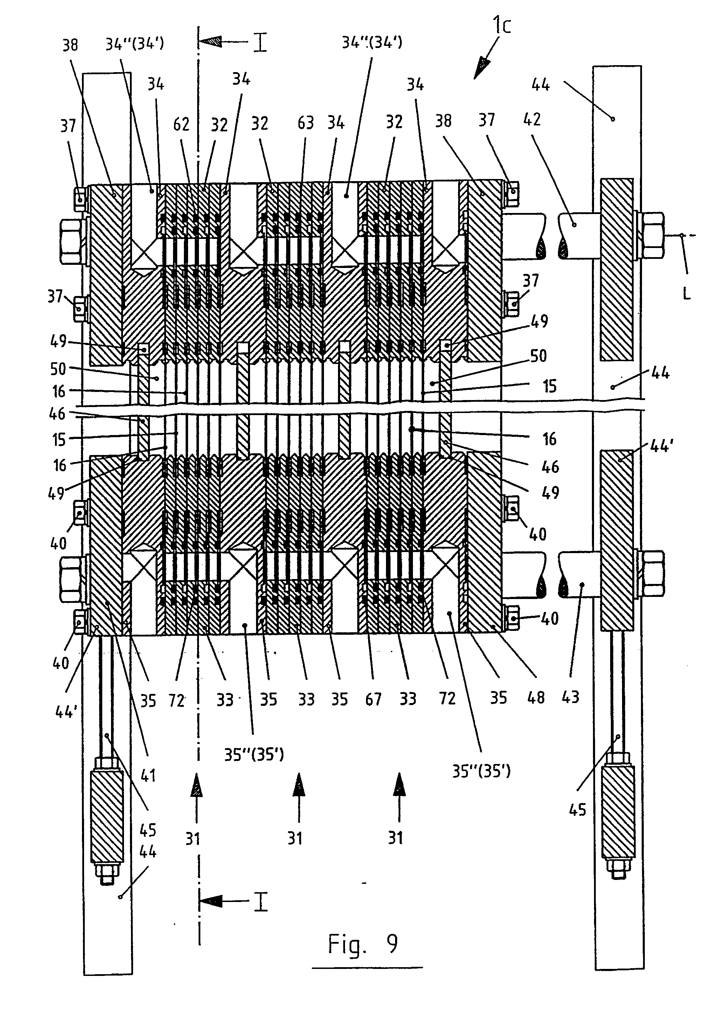

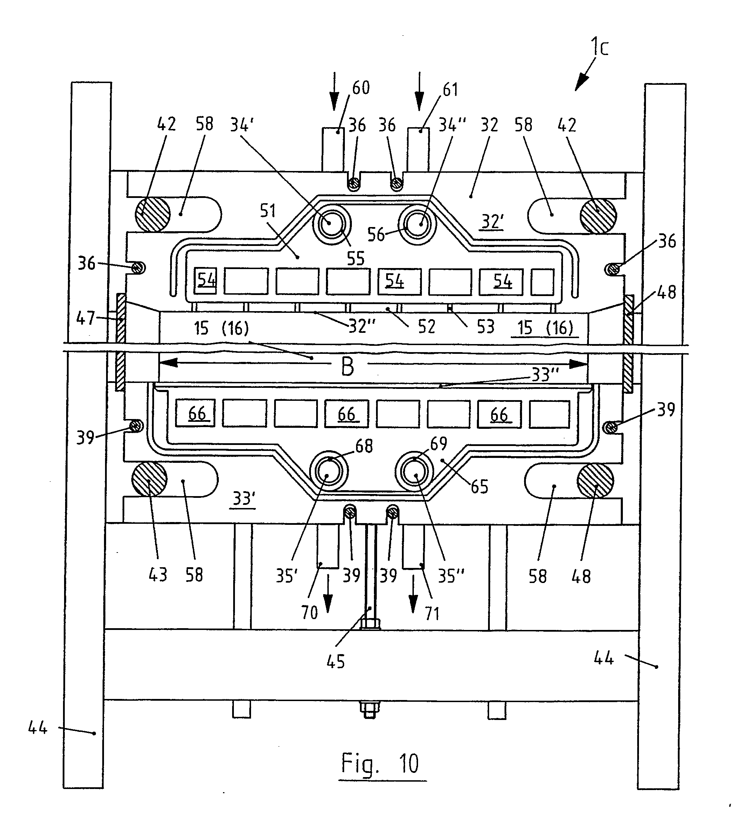

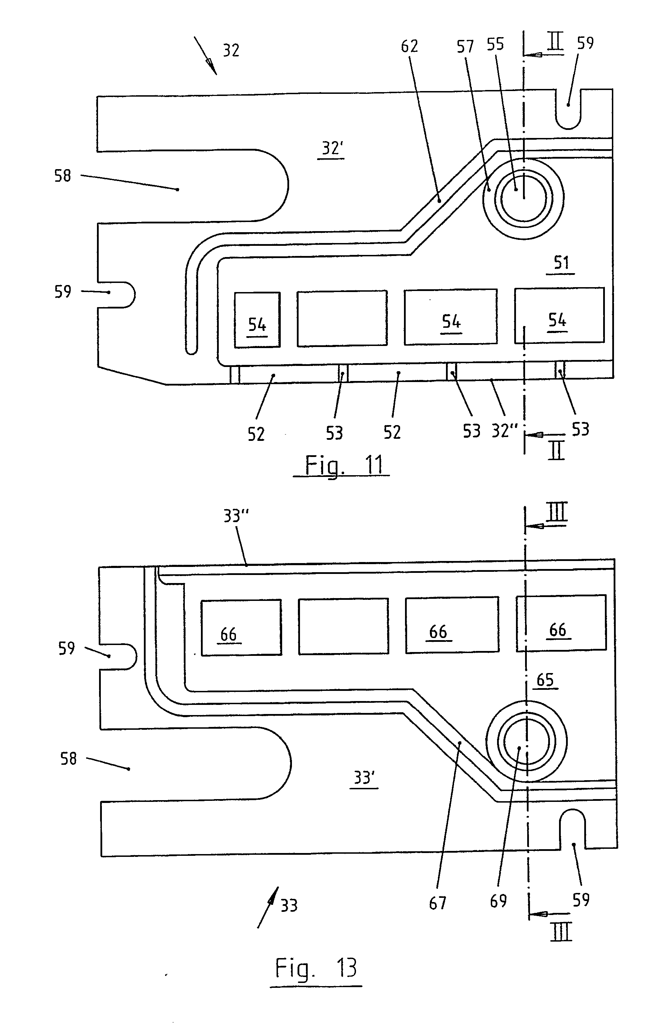

Die Figuren 9 - 14 beziehen sich auf eine bevorzugte Ausführungsform der Erfindung, d. h. auf eine Vorrichtung 1c, die mehrere voneinander getrennte und in einer Längsachse L aufeinanderfolgende Stufen 31 aufweist. Im Arbeitsraum jeder Stufe sind abwechselnd mehrere von einem Zuschnitt aus einem Flachmaterial (Vlies bzw. Non-Woven-Material) hergestellte Strömungshilfen 15 für die aufzubereitende Flüssigkeit (Meerwasser) sowie entsprechende Strömungshilfen 16 für die aufbereitete Flüssigkeit (Kondensat) jeweils in parallelen vertikalen Ebenen senkrecht zur Längsachse L vorgesehen. In Richtung der Längsachse L wechseln die Strömungshilfen 15 und 16 ab. Die Strömungshilfen 15 und 16 sind jeweils zwischen oberen Platten 32 und unteren Platten 33 eingespannt. Die Platten 32 dienen zum Zuführen und Verteilen der jeweiligen Flüssigkeit auf die gesamte Breite B, die die jeweilige Strömungshilfe 15 bzw. 16 senkrecht zur Zeichenebene der Fig. 9 aufweist. Sämtliche Platten 32 sind identisch ausgebildet.

Die unteren Platten 33 dienen zum Auffangen bzw. Sammeln der Flüssigkeit der jeweiligen Strömungshilfe 15 bzw. 16 sowie zum Abführen dieser Flüssigkeit. Sämtliche Platten 33 sind identisch ausgebildet.

Die Platten 32 und 33, die jeweils in vertikalen Ebenen senkrecht zur Längsachse L angeordnet sind und von denen jeweils eine Platte 32 mit einer Platte 33 in einer gemeinsamen vertikalen Ebene liegt, sind innerhalb einer Stufe 31 zwischen zwei Anschlußplatten 34 und 35 vorgesehen, die jeweils eine im Vergleich zu den Platten 32 und 33 größere Dicke aufweisen. Das von den oberen Platten 32 und den oberen Anschlußplatten 34 gebildete Plattenpaket ist unter Verwendung von sich in Richtung der Längsachse L erstreckenden Spannbolzen 36 mit Muttern 37 zwischen zwei äußeren Abschlußplatten 38 eingespannt, so daß jede Strömungshilfe 15 bzw. 16 an ihrem oberen horizontalen Randbereich zwischen zwei Platten 32 festgeklemmt ist.

In gleicher Weise ist das von den Platten 33 und den unteren Anschlußplatten 35 gebildete Plattenpaket mittels Spannbolzen 39, die sich in Richtung der Längsachse L erstrecken, und unter Verwendung von Muttern 40 zwischen zwei äußeren Abschlußplatten 41 eingespannt, so daß jede Strömungshilfe 15 bzw. 16 im Bereich ihres unteren, horizontalen Randbereiches zwischen zwei Platten 33 festgeklemmt ist.

Die Platten 32, die Anschlußplatten 34 und die Abschlußplatten 38 sind jeweils an zwei oberen, sich in Richtung der Längsachse L erstreckenden Tragwellen 42 gehalten. In gleicher Weise sind die Platten 33, die Anschlußplatten 35 und die Abschlußplatten 41 an zwei Tragwellen 43 gehalten. Die Tragwellen 42 sind jeweils beidendig fest an einem Vorrichtungsrahmen 44 befestigt. Die Tragwellen 43 sind jeweils beidendig an einem Klotz 44' befestigt, der an dem Maschinen- bzw. Vorrichtungsrahmen 44 in vertikaler Richtung senkrecht zur Längsachse L einstellbar ist, wie dies mit dem Doppelpfeil C angedeutet ist. Diese Einstellung, die beispielsweise mittels Einstellspindeln 45 erfolgt, ist notwendig, um die Strömungshilfen 15 und 16 nach ihrem Festklemmen zwischen den Platten 32 und 33 zu spannen, so daß sie exakt in vertikalen Ebenen parallel zueinander verlaufen.

Zwischen jeder oberen Anschlußplatte 34 und unteren Anschlußplatte 35 ist eine vertikale, senkrecht zur Längsachse L liegende Trennwand 46 vorgesehen. Jede Trennwand 46 erstreckt sich in horizontaler Richtung beidendig bis an eine Trennwand 47 bzw. 48. Die beiden Trennwände 47 und 48 sind wiederum in vertikaler Richtung angeordnet und erstrecken sich in Richtung der Längsachse L über die gesamte Länge des von den Platten 32 und den Anschlußplatten 34 bzw. von den Platten 33 und den Anschlußplatten 35 gebildeten Plattenpaket. Die Trennwände 46 sind jeweils in Nuten 49 der Anschlußplatten 34 bzw. 35 gehalten. Die Trennwände 47 und 48 sind jeweils am Maschinengestell 44 befestigt. Durch die Trennwände 46, 47 und 48 wird für jede Stufe 31 ein geschlossener Arbeitsraum 50 gebildet, in welchem die Strömungshilfen 15 und 16 freiliegend vorgesehen sind.

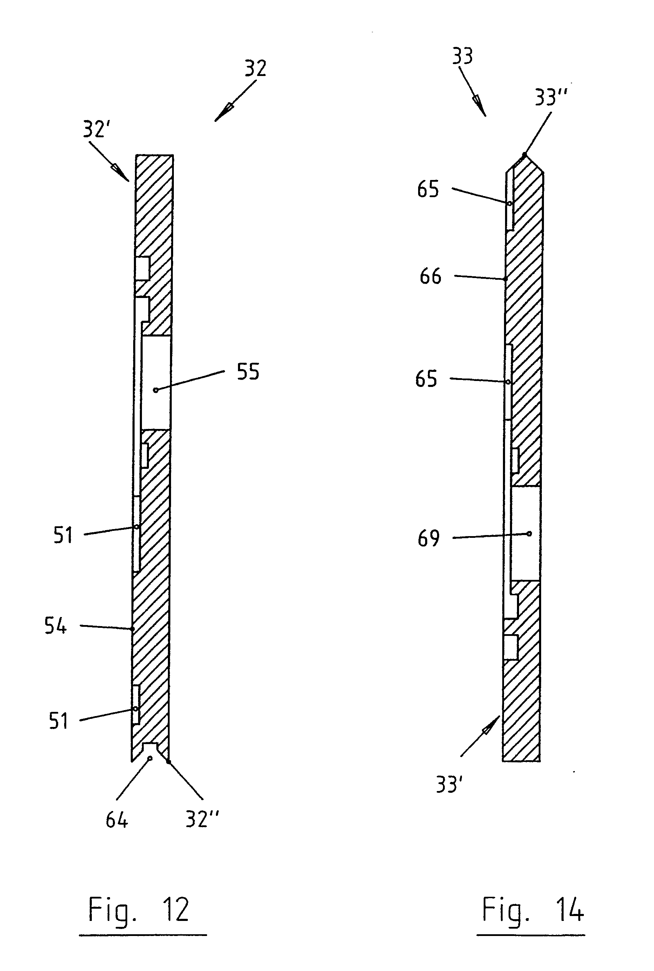

Damit die Platten 32 die Funktion der Verteilung, d. h. der Kanäle 4 und 5 erfüllen können, weist jede im wesentlichen rechteckförmig ausgebildete Platte 32 an ihrer Vorderseite 32' eine Vertiefung 51 auf, die zu allen Seiten der Platte 33 hin begrenzt ist, und zwar auch zu der unteren Längsseite 32'' durch einen Steg 52, der allerdings durch mehrere Nuten 53 unterbrochen ist. Innerhalb der Vertiefung sind einige Vorsprünge 54 vorgesehen. Weiterhin weist jede Platte 32 im Bereich der Vertiefung 51 zwei Bohrungen 55 und 56 auf, die jeweils von einer ringförmigen Ausnehmung 57 umschlossen sind. Wie die Fig. 12 zeigt, bildet jeder Vorsprung 54 eine Fläche, die in einer Ebene mit der Fläche der Vorderseite 32' (außerhalb der Vertiefung 51) liegt. Weiterhin ist jede Ausnehmung 57 etwas tiefer in die Platte 32 eingebracht als die Vertiefung 51. Die Fläche des Steges 52 liegt selbstverständlich ebenfalls in der Ebene der Fläche der Vorderseite 32'.

Jede Platte 32 besitzt noch zwei Ausnehmungen 58 für die Tragwellen 42 und vier Ausnehmungen 59 für die Spannbolzen 36. Im eingebauten Zustand liegen alle Platten 32 mit ihren Bohrungen 55 sowie auch mit ihren Bohrungen 56 deckungs- bzw. achsgleich, und zwar miteinander sowie auch mit Öffnungen von Kanälen 34' und 34'', die in jeweils einer Anschlußplatte 34 vorgesehen sind. So liegen die Bohrungen 55 sämtlicher Platten 32 einer Stufe 31 deckungsgleich mit einer Öffnung eines Kanals 34' in einer Anschlußplatte 34, der (Kanal) zum Zuführen von Meerwasser vorgesehen ist. Die Bohrungen 55 der Platten 32 jeder Stufe 31 liegen deckungsgleich mit einer Öffnung eines Kanals 34'', der in der entsprechenden Anschlußplatte 34 zum Zuführen des aufbereiteten Wassers (Kondensats) vorgesehen ist. An jeder Stufe 31 wird das Meerwasser über eine Pumpe und eine Leitung 60 dem Kanal 34' in der entsprechenden Anschlußplatte 34 zugeführt. In gleicher Weise erfolgt das Zuführen des aufbereiteten Wassers (Kondensats) über eine Pumpe und eine Leitung 61 an den Kanal 34'' in der entsprechenden Anschlußplatte 34. Mit Hilfe von Dichtungen 62 liegen die Platten 32 dicht gegeneinander bzw. dicht gegen die Anschlußplatten 34 an. Sämtliche Platten 32 sind mit ihrer Vorderseite 32' in gleicher Richtung orientiert. Die Vertiefung 51 jeder Platte bildet eine Verteilerkammer, die durch eine plane Fläche einer benachbarten Platte 32 bzw. 34 verschlossen ist und der das Meerwasser oder das aufbereitete Wasser (Kondensat) über den von den Bohrungen 55 bzw. 56 gebildeten Kanal zugeführt werden.

Um das Meerwasser vom aufbereiteten Wasser (Kondensat) zu trennen, d.h. um sicherzustellen, daß der von der Vertiefung 51 einer Platte 32 gebildeten Kammer nur Meerwasser und der von der Vertiefung 51 einer benachbarten Platte 32 gebildeten Kammer nur aufbereitetes Wasser zugeführt wird, sind an den Platten 32 abwechselnd die Bohrungen 55 oder 56 umschließende Dichtungsringe 63 vorgesehen. Immer dort, wo die von der Vertiefung 51 einer Platte 32 gebildete Kammer zur Aufnahme von Meerwasser dient, befindet sich der Dichtungsring 63 an der Bohrung 56 und verhindert dort ein Eintreten des aufbereiteten Wassers in diese Kammer. Dort wo die von der Vertiefung 51 gebildete Kammer zur Aufnahme des aufbereiteten Wassers dient, ist an der Bohrung 55 ein Dichtungsring 63 vorgesehen und verhindert dort ein Eintreten des Meerwassers in diese Kammer. Die Vorsprünge 54 dienen zum Festklemmen der Strömungshilfen 15 und 16.

Die Flüssigkeit, die sich in der von der jeweiligen Vertiefung 51 gebildeten Kammer befindet, fließt durch Öffnungen, die von den Nuten 53 gebildet sind, nach unten und verteilt sich auf die jeweilige Strömungshilfe 15 bzw. 16 über die gesamte Breite B.

Um zu verhindern, daß an der unteren Längskante 32' Flüssigkeit von der Vorderseite 32' an die Rückseite der jeweiligen Platte 32 gelangt und damit eine ungewünschte Vermischung zwischen aufbereiteter Flüssigkeit und aufzubereitender Flüssigkeit eintritt, ist jede Platte 32 an der Längsseite 32" mit einer durchgehenden Nut 64 versehen.

Die Platten 33 sind nahezu identisch mit den Platten 32 ausgebildet, d.h. jede Platte 33 besitzt an ihrer Vorderseite 33' eine der Ausnehmung 51 entsprechende Ausnehmung 65, die allerdings zu der oberen Längsseite 33" hin offen ist. Die Ausnehmung 65 ist mit den Vorsprüngen 54 entsprechenden Vorsprüngen 66 versehen. Weiterhin besitzt jede Platte 33 eine der Dichtung 62 entsprechende Dichtung 67, innerhalb der Ausnehmung 65 zwei Bohrungen 68 und 69 und die Ausnehmungen 58 und 59 für die Tragwellen 43 bzw. Spannbolzen 39. Die Platten 33, die die gleiche Dicke wie die Platten 32 aufweisen, sind mit ihrer Vorderseite 33' wieder in der gleichen Richtung orientiert.

In jeder Stufe 31 liegen die Platten 33 mit ihren Bohrungen 68 deckungsgleich sowie achsgleich zueinander und zu einer Öffnung eines in einer Anschlußplatte 35 vorgesehenen Kanals 35', der zum Abführen des Meerwassers dient und mit einer entsprechenden Leitung 70 verbunden ist. Die Bohrungen 69 liegen deckungsgleich sowie achsgleich zueinander sowie zu einer Öffnung eines in der Anschlußplatte 35 vorgesehenen Kanals 35", der zum Abführen des aufbereiteten Wassers (Kondensats) dient und mit einer entsprechenden äußeren Leitung 71 verbunden ist. Um auch hier wiederum eine Trennung des Meerwassers und des aufbereiteten Wassers zu erreichen, sind abwechselnd an den Bohrungen 68 und 69 Dichtungsringe 72 vorgesehen und zwar ein Dichtungsring 72 an einer Bohrung 68 immer dort, wo auch die darüber angeordnete Platte 32 einen Dichtungsring 63 an der Bohrung 55 aufweist, d.h. die von der Ausnehmung 65 gebildete Kammer zum Sammeln des aufbereiteten Wassers dient. Ein die Bohrung 69 umschließender Dichtungsring 72 ist immer dort vorgesehen, wo auch die darüberliegende Platte 32 an der Bohrung 56 einen Dichtungsring 63 aufweist, d.h. die von der Ausnehmung 65 gebildete Kammer zum Sammeln und Abführen des Meerwassers dient. Um an der oberen Längsseite 33" eine exakte Trennung der Medien (Meerwasser und aufbereitetes Wasser) sicherzustellen, ist jede Platte 33 dort dachschrägenartig ausgebildet (Fig. 14).

Mit dem beschriebenen, plattenförmigen Aufbau der Vorrichtung 1c ist es möglich, unter Verwendung gleichartiger Teile die Größe der Vorrichtung, d.h. insbesondere die Anzahl und/oder Größe der Stufen 31, dem jeweiligen Anwendungsfall entsprechend zu wählen.

Die einzelnen Stufen 31 der Vorrichtung 1c bilden vorzugsweise eine Kaskade, d.h. werden vorzugsweise in der Form betrieben, wie dies im Zusammenhang mit der Fig. 8 für die Vorrichtungen 1 beschrieben wurde.

Die Platten 32, 33, 34 und 35 sind vorzugsweise aus Kunststoff und die Abschlußplatten 38 und 41 bevorzugt aus Stahl gefertigt.

Bei allen beschriebenen Ausführungsformen erfolgt das Erwärmen der aufzubereitenden Flüssigkeit (Meerwasser) vorzugsweise in einem Wärmetauscher, dem die notwendige Wärmeenergie über ein Wärme transportierendes Medium, beispielsweise Wasser ohne oder mit geringem Salzgehalt, zugeführt wird. Dies hat insbesondere bei der Aufbereitung von Meerwasser Vorteile.

Obwohl die Gewinnung von Brauch- bzw. Trinkwasser aus Meerwasser bzw. Salzwasser einen bevorzugten Anwendungsbereich der Erfindung darstellt, kann dieser auch für andere Zwecke dort eingesetzt werden, wo durch Verdampfen und anschließendes Kondensieren aus einer aufzubereitenden Flüssigkeit ein Endprodukt in Form eines Kondensats erhalten werden soll.

Bevorzugt wird bei der erfindungsgemäßen Vorrichtung jeweils ein Teil der Wärmeenergie der aufbereiteten Flüssigkeit über wenigstens einen Wärmetauscher an die aufzubereitende Flüssigkeit abgegeben, um so den Bedarf an zugeführter Fremdenergie weiter zu reduzieren.

Bezugszeichenliste

| | |
|---|---|
| 1,1a,1b,1c, | Vorrichtung |
| 2 | Innenraum |
| 3 | Gehäuse |
| 4,5,6,7 | Kanal |
| 4',5',6',7' | Verteiler |
| 8 | Schenkel |
| 9 | Jochfläche |
| 10 | Eingang |
| 11 | Ausgang |
| 12 | Eingang |
| 13 | Ausgang |
| 14 | Öffnung |
| 15 | Strömungshilfe |
| 16 | Strömungshilfe |
| 17 | Gewicht |
| 18 | Leitung |
| 19 | Pumpe |
| 20 | Wärmetauscher |
| 21 | Heizeinrichtung |
| 22 | Rohrleitung |
| 23 | Tank |
| 24 | Eingang |
| 25 | Hilfsausgang |
| 26 | Hilfspumpe |
| 28 | Kühler |
| 29 | Eingang |
| 30 | Ausgang |
| 31 | Stufe |
| 32 | Platte |
| 32' | Vorderseite |
| 32" | Längsseite |
| 33 | Platte |
| 33' | Vorderseite |
| 33" | Längsseite |
| 34 | Anschlußplatte |
| 34',34" | Kanal |
| 35 | Anschlußplatte |
| 35' ,35" | Kanal |
| 36 | Spannbolzen |
| 37 | Mutter |
| 38 | Anschlußplatte |
| 39 | Spannbolzen |
| 40 | Mutter |
| 41 | Abschlußplatte |
| 42 | Tragwelle |
| 43 | Tragwelle |
| 44 | Maschinengestell |
| 44' | Klotz |
| 45 | Einstellspindel |
| 46,47,48 | Trennwand |
| 49 | Nut |
| 50 | Arbeitsraum |
| 51 | Vertiefung |
| 52 | Steg |
| 53 | Nut |
| 54 | Vorsprung |
| 55,56 | Borung |
| 57,58,59 | Ausnehmung |
| 60,61 | Leitung |
| 62 | Dichtung |
| 63 | Dichtungsring |
| 64 | Nut |
| 65 | Vertiefung |
| 66 | Vorsprung |
| 67 | Dichtung |
| 68,69 | Borung |
| 70,71 | Leitung |
| 72 | Dichtungsring |

**Patentansprüche**

1. Vorrichtung zur Gewinnung einer aufbereiteten Flüssigkeit in Form eines Kondensats aus einer aufzubereitenden Flüssigkeit durch Verdampfen und Kondensieren, mit wenigstens einem ersten Strömungsbereich (4, 6; 32, 33) in einem Arbeitsraum (2, 50) zur Ausbildung einer ersten Strömung aus der aufzubereitenden Flüssigkeit, sowie mit wenigstens einer, dem ersten Strömungsbereich benachbarten und im Vergleich zur Temperatur der ersten Strömung kühleren Kondensationsfläche für am ersten Strömungsbereich (4, 6; 32, 33) verdampfte Flüssigkeit, **dadurch gekennzeichnet**, daß die Kondensationsfläche von der Oberfläche der Flüssigkeit des wenigstens einen zweiten Strömungsbereichs (5, 7; 32, 33) gebildet ist, und daß sich der wenigstens eine erste Strömungsbereich (4, 6; 32, 33) sowie der wenigstens eine zweite Strömungsbereich (5, 7; 32, 33) in einem gemeinsamen Arbeitsraum (2, 50) einander benachbart als flächige Strömung vorgesehen sind und sich jeweils in vertikaler Richtung erstrecken.

2. Vorrichtung nach Anspruch 1, dadurch gekennzeichnet, daß wenigstens ein Strömungsbereich zur Erzeugung der flächigen Strömung an einer Strömungshilfe (15, 16) aus hydrophilem Material ausgebildet ist.

3. Vorrichtung zur Gewinnung einer aufbereiteten Flüssigkeit in Form eines Kondensats aus einer aufzubereitenden Flüssigkeit durch Verdampfen und Kondensieren, mit wenigstens einem ersten Strömungsbereich (4, 6; 32, 33) in einem Arbeitsraum (2, 50) zur Ausbildung einer ersten Strömung aus der aufzubereitenden Flüssigkeit, sowie mit wenigstens einer, dem ersten Strömungsbereich benachbarten und im Vergleich zur Temperatur der ersten Strömung kühleren Kondensationsfläche für am ersten Strömungsbereich (4, 6; 32, 33) verdampfte Flüssigkeit, **dadurch gekennzeichnet**, daß die Kondensationsfläche von der Oberfläche der Flüssigkeit des wenigstens einen zweiten Strömungsbereichs (5, 7; 32, 33) gebildet ist, und daß sich der wenigstens eine erste Strömungsbereich (4, 6; 32, 33) sowie der wenigstens eine zweite Strömungsbereich (5, 7; 32, 33) in einem gemeinsamen Arbeitsraum (2, 50) einander benachbart als flächige Strömung vorgesehen sind und sich jeweils in einer Richtung erstrecken, die mit der Vertikalen einen Winkel einschließt, und zur Erzeugung einer flächigen Strömung jeweils an einer Strömungshilfe (15, 16) aus hydrophilem Material ausgebildet sind.

4. Vorrichtung nach einem der Ansprüche 1 bis 3, dadurch gekennzeichnet,

daß dem wenigstens einen ersten Strömungsbereich (4, 6; 32, 33) in dem Arbeitsraum (2, 50) bzw. in einem diesen Arbeitsraum bildenden Gehäuse (3), welches vorzugsweise ein thermisch isoliertes Gehäuse und/oder ein Gehäuse mit einem evakuierbaren Innenraum (2) ist, wenigstens ein zweiter Strömungsbereich (5, 7; 32, 33) zur Ausbildung der zweiten Strömung aus der bereits aufbereiteten Flüssigkeit benachbart und vorzugsweise parallel ist, wobei vorzugsweise beidseitig von jedem ersten Strömungsbereich (4, 6; 32, 33) jeweils ein zweiter Strömungsbereich (5, 7; 32, 33) vorgesehen ist,

und/oder daß die Kondensationsfläche von der dem ersten Strömungsbereich (4, 6; 32, 33) zugewendeten Oberfläche der Flüssigkeit des wenigstens einen zweiten Strömungsbereiches (5, 7; 32, 33) gebildet ist,

und/oder daß der wenigstens eine erste Strömungsbereich (4, 6, 15) von wenigstens einem zweiten Strömungsbereich (5, 7, 16) umschlossen ist.

5. Vorrichtung nach einem der Ansprüche 1 bis 4, dadurch gekennzeichnet, daß jeder Seite des ersten Strömungsbereiches bzw. der dortigen flächigen Strömung wenigstens ein zweiter Strömungsbereich (5, 7; 32, 33) im gleichen Arbeitsraum (2, 50) benachbart ist.

6. Vorrichtung nach einem der Ansprüche 1 bis 5, dadurch gekennzeichnet,

daß die wenigstens eine Strömungshilfe (15) des wenigstens einen ersten Strömungsbereichs über einen oberen, ersten Kanal (4) oder über eine obere Kammer (51) mit der aufzubereitenden Flüssigkeit beaufschlagt wird, wobei vorzugsweise der wenigstens eine erste Strömungsbereich unterhalb des ersten, oberen Kanals (4) oder der oberen Kammer (51) einen ersten, unteren Kanal (6) bzw. eine untere Kammer (65) zum Sammeln und Abführen der von der Strömungshilfe (15) abfließenden Flüssigkeit aufweist,

und/oder daß die wenigstens eine Strömungshilfe (16) des wenigstens einen zweiten Strömungsbereichs über einen zweiten oberen Kanal (5) oder einer oberen Kammer (51) mit bereits aufbereiteter Flüssigkeit beaufschlagbar ist, wobei vorzugsweise unter dem zweiten oberen Kanal (5) bzw. der oberen Kammer (51) des wenigstens einen zweiten Strömungsbereichs ein zweiter unterer Kanal (7) oder eine untere Kammer (65) zum Sammeln und Abführen der von der Strömungshilfe (16) abfließenden, aufbereiteten Flüssigkeit vorgesehen ist,

wobei vorzugsweise zumindest die unteren Kanäle (6, 7) als nach oben hin offene Rinnen, bevorzugt mit einem U- oder V-Profil ausgebildet sind und/oder die oberen und/oder unteren Kanäle (4 - 7) jeweils separate, an Haltemitteln befestigte Elemente sind und/oder die oberen und/oder unteren Kanäle (4 - 7) einstückig miteinander bzw. einstückig mit einem Element der Vorrichtung hergestellt sind,

und/oder wobei vorzugsweise die oberen Kanäle (4, 5) an ihrem Boden (9) jeweils mit einer Vielzahl von Öffnungen (14) für einen Flüssigkeitsdurchtritt versehen sind.

7. Vorrichtung nach einem der vorhergehenden Ansprüche, dadurch gekennzeichnet, daß jede Strömungshilfe (15, 16) an ihrem oberen und/oder unteren Ende jeweils zwischen zwei oberen bzw. vertikalen Ebenen angeordneten Platten (32, 34; 33, 35), die ein Plattenpaar bilden, eingespannt sind,

wobei vorzugsweise an den Platten (32, 34) jedes oberen Plattenpaares wenigstens eine Kammer (51) zum Zuführen der aufzubereitenden Flüssigkeit oder der aufbereiteten Flüssigkeit an eine Strömungshilfe (15, 16) gebildet ist, und daß an den Platten (33, 35) jedes unteren Plattenpaares eine Kammer (65) zum Abführen der aufzubereitenden Flüssigkeit oder der aufbereiteten Flüssigkeit von einer Strömungshilfe (15, 16) gebildet ist, wobei vorzugsweise die Kammer zum Zuführen oder Abführen der Flüssigkeit jeweils von wenigstens einer Vertiefung (51, 65) in mindestens einer der beiden Platten des jeweiligen Plattenpaares gebildet ist,

und/oder wobei vorzugsweise die oberen und unteren Platten (32, 34; 33, 35) jeweils einen Plattenstapel bilden und Mittel (36, 37; 39, 40; 42, 43) zum Zusammenpressen und Halten der Platten dieser Plattenstapel vorgesehen sind.

8. Vorrichtung nach Anspruch 7, dadurch gekennzeichnet, daß jeweils einer Strömungshilfe (15), die an ihrem oberen Rand zwischen zwei oberen Platten (32, 34) und an ihrem unteren Rand zwischen zwei unteren Platten (33, 35) eingespannt ist und für die Ausbildung eines ersten Strömungsbereichs der aufzubereitenden Flüssigkeit dient, eine ebenfalls zwischen zwei oberen Platten (32, 34) und zwei unteren Platten (33, 35) eingespannte Strömungshilfe (16) für die Ausbildung eines zweiten Strömungsbereichs für die aufbereitete Flüssigkeit benachbart ist.

9. Vorrichtung nach Anspruch 7 oder 8, dadurch gekennzeichnet, daß die oberen und unteren Platten (32, 33) jeweils wenigstens zwei Bohrungen (55, 56; 68, 69) aufweisen, von denen in den oberen Platten (32) erste Bohrungen (55) einen die dortigen Kammern (51) schneidenden Kanal zum Zuführen der aufzubereitenden Flüssigkeit und zweite Bohrungen (56) einen die dortigen Kammern (51) ebenfalls schneidenden Kanal zum Zuführen der aufbereiteten Flüssigkeit bilden, und von denen erste Bohrungen in den unteren Platten (33) einen die dortigen Kammern (65) schneidenden Kanal zum Abführen der aufzubereitenden Flüssigkeit und zweite Bohrungen (69) einen die dortigen Kammern (65) ebenfalls schneidenden Kanal zum Abführen der aufbereiteten Flüssigkeit bilden, und daß an dem wenigstens einen ersten Strömungsbereich für die aufzubereitende Flüssigkeit die zweite Bohrung (56) in der jeweiligen oberen Platte (32) sowie die zweite Bohrung (69) in der jeweiligen unteren Platte (33) durch eine Dichtung, vorzugsweise durch einen Dichtungsring (63, 72) gegenüber der Kammer (51, 65) zum Zuführen bzw. zum Abführen der aufzubereitenden Flüssigkeit verschlossen ist, und daß an dem wenigstens einen zweiten Strömungsbereich der aufbereiteten Flüssigkeit die erste Bohrung (55, 68) in der oberen und unteren Platte (32, 33) durch eine Dichtung, vorzugsweise durch einen Dichtungsring (63, 72) gegenüber der Kammer (51, 65) zum Zuführen bzw. Abführen der aufbereiteten Flüssigkeit abgedichtet sind.

10. Vorrichtung nach einem der Ansprüche 7 bis 9, dadurch gekennzeichnet, daß wenigstens eine obere Platte sowie wenigstens eine untere Platte jeweils eine Anschlußplatte (34, 35) mit Kanälen (34', 34''; 35', 35'') zum Zuführen und Abführen der Flüssigkeiten ist.

11. Vorrichtung nach einem der Ansprüche 7 bis 10, dadurch gekennzeichnet, daß die oberen und unteren Platten (32, 34; 33, 35) zum Spannen der Strömungshilfen (15, 16) relativ zueinander einstellbar sind.

12. Vorrichtung nach einem der Ansprüche 1 bis 11, dadurch gekennzeichnet, daß mehrere Einzelvorrichtungen (1) und/oder mehrere jeweils wenigstens einen ersten Strömungsbereich (4, 6; 32, 33) und einen zweiten Strömungsbereich (5, 7; 32, 33) aufweisende Arbeitsbereiche bzw. Stufen (31) kaskadenartig aufeinanderfolgend derart vorgesehen sind, daß die Flüssigkeiten diese Vorrichtungen bzw. Arbeitsbereiche nacheinander durchfließen, und zwar vorzugsweise jeweils in umgekehrter Reihenfolge,

wobei vorzugsweise jede Stufe (31) von einem Stapel oberer und unterer Platten (32, 34; 33, 35) mit jeweils wenigstens einer Anschlußplatte (34, 35) gebildet ist.

Fig. 1

Fig. 2

4 (5)

_Fig. 3_

14

8

9

8

4 (5)

_Fig. 4_

15 (16)

27

Fig. 5

14

15 (16)

Fig. 6

Fig. 7

EP 0 441 194 A2

Fig. 8

17

Fig. 9

Fig. 10

Fig. 11

Fig. 13

Fig. 12

Fig. 14